# EUROPEAN PATENT SPECIFICATION

(11) **EP 2 955 898 B1**
(45) Date of publication and mention of the grant of the patent: **19.09.2018**
(21) Application number: 14172329.6
(22) Date of filing: 13.06.2014
(51) Int. Cl.: G01S 1/08, G01S 5/02, H04W 4/029

(54) **Method and system for combining beaconing with positioning**
Verfahren und System zum Kombinieren von Befeuerung mit Positionierung
Procédé et système permettant de combiner une balise avec le positionnement

(43) Date of publication of application: 16.12.2015
(73) Proprietor: 9Solutions Oy, 90590 Oulu (FI)
(72) Inventor: Herrala, Sami, 90590 Oulu (FI)
(74) Representative: Kolster Oy Ab

(56) References cited:
- SE-A1- 1 350 227
- US-A1- 2013 281 084
- US-A1- 2014 087 752

## Description

### Field

The invention relates to the field of wireless communications and positioning.

### Background

Positioning and location-based applications have become an interesting topic. Some latest solutions employ micro-location technology and proximity sensing using wireless beacons.

US 2014/0087752 discloses a solution utilizing Bluetooth beacons for location determination of a mobile device. A Wi-Fi signal scan and a Bluetooth beacon scan are initiated at the mobile device. A location of the mobile device is determined based on at least on at least one Bluetooth beacon detectable by the mobile device, where the at least one Bluetooth beacon is transmitted from a first location, and where the first location is the location of the mobile device. A user of the mobile device is prompted for location information input, in response to determining that no Bluetooth beacons are detectable by the mobile device or when the at least one Bluetooth beacon detected is determined to be transmitted from a second location different from the location of the mobile device.

US 2013/0281084 discloses a solution where a mobile station is configured to detect entry into a premises of an enterprise in response to short range or near field radio-frequency signals. The mobile station receives signals from one or more short range wireless beacons located in the premises, and the mobile station sends identifiers from the beacon signals to a location server. The location server processes the identifiers to determine location of the mobile station within the premises and sends information to the mobile station, for presentation to the user of a map of the premises showing the determined location of the mobile station within the premises. Entry detection also may be used to automatically check-in a customer/user of the mobile station with a system of the enterprise used by personnel of the enterprise at the premises to enable the personnel to customize interactions the customer while the customer is at the premises.

SE 1 350 227 A1 relates to a method for reporting stolen items. Upon manufacturing of the items (e.g. bicycles, phones, cars etc), an object is attached to the item that identifies that item uniquely and the user of the item is aware of the unique ID (e.g. a license associated with the item). In case the item is stolen, any mobile device that has a proprietary "search application" installed, can scan its surroundings for the beacon that includes the ID of the stolen item. If the beacon is found, the mobile device sends its location along with the ID of the stolen item to a server, in order to track the stolen item.

### Brief description

The invention is defined by the independent claims.

Embodiments of the invention are defined in the dependent claims.

### List of drawings

Embodiments of the present invention are described below, by way of example only, with reference to the accompanying drawings, in which
Figure 1 illustrates a wireless communication scenario to which embodiments of the invention may be applied;
Figure 2 illustrates a procedure for combining positioning with beaconing according to an embodiment of the invention;
Figures 3 and 4 illustrate applications of triggering a function in a mobile communication device in response to a detected beacon signal according to some embodiments of the invention;
Figures 5 and 6 illustrate embodiments for realizing the applications of Figures 3 and 4;
Figures 7 and 8 illustrate an embodiment for tracking locations of assets; and
Figures 9 to 11 illustrate block diagrams of apparatuses according to some embodiments of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

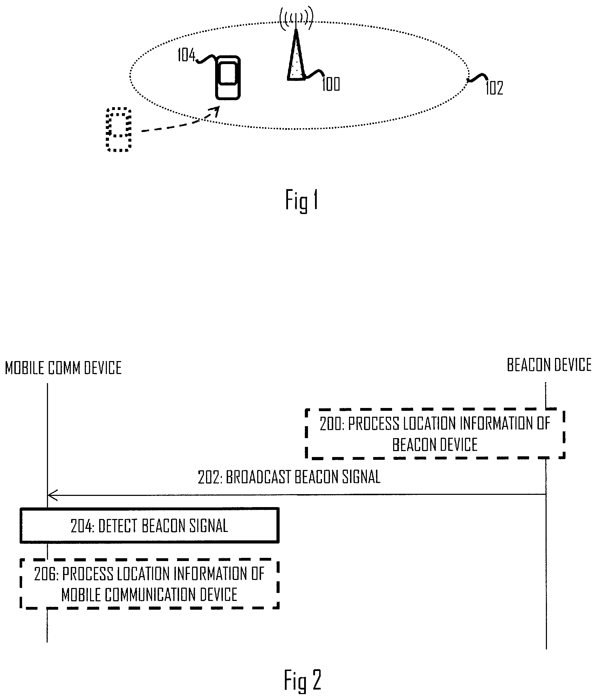

Figure 1 illustrates a wireless communication scenario to which embodiments of the invention may be applied. Referring to Figure 1, a beacon device 100 may be configured to broadcast a beacon signal in a limited geographical area defined by radio coverage 102 of the beacon device 100. Some conventional solutions utilize such a beacon device for micro marketing to broadcast advertisements in a supermarket, for example. Other conventional solutions employ the beacon device for micro-location applications, i.e. to trigger a software application in a mobile communication device 104 detecting the beacon signal. A radio communication technology of the beacon signal may be Bluetooth Low Energy or Bluetooth Smart.

The beacon device 100 may be dedicated to only broadcast the beacon signal. The beacon signal may comprise a universally unique identifier of the beacon device, and the mobile communication device 104 may map the identifier to a determined function and execute the function. The function may be the execution of the software application or output of a push notification message to a user of the device 104.

The mobile communication device 104 may be configured to scan for the beacon signals transmitted by the beacon devices. Upon detecting the beacon signal when entering the coverage area 102 of the beacon device, the mobile communication device 104 may execute a determined function in response to the detection of the beacon signal. In an example, the detection may trigger execution of the software application. The software application may be considered as computer software that causes the mobile communication device to perform useful tasks beyond running the mobile communication device itself, e.g. tasks that benefit a user of the device. In another example, the detection may trigger output of a notification through a user interface of the mobile communication device 104. The mobile communication device 104 may be a cellular phone, a smart phone, a palm computer with wireless communication capability, or any other portable device comprising a processor and a wireless communication circuitry.

Figure 2 illustrates an embodiment of a procedure for associating processing of location information with the beacon signal transmissions. The procedure may comprise steps performed by the mobile communication device 104 and steps performed by the beacon device 100. Referring to Figure 2, the procedure comprises broadcasting, by the beacon device, a beacon signal (step 202). In block 204, the mobile communication device detects the beacon signal. In connection with the Bluetooth beacon signal, location information of at least one of the Bluetooth beacon device and the mobile communication device is processed. The processing of the location information may be performed in the beacon device 100 or in the mobile communication device 104. In the embodiment where the location information is processed in the beacon device, the location information may be processed in block 200 before transmitting the beacon signal. In the embodiment where the location information is processed in the mobile communication device, the location information may be processed in block 206 after receiving the beacon signal or even before receiving the beacon signal. The processing of the location information is linked to the beacon signal in a procedure executed by the beacon device and/or the mobile communication device, as described below.

In an embodiment, the processing of the location information in the mobile communication device is triggered by the detection of the beacon signal. In another embodiment, the processing of the location information in the mobile communication device triggers the scanning for the beacon signal in the mobile communication device.

In an embodiment, the processing of the location information in the beacon device triggers the transmission of the beacon signal.

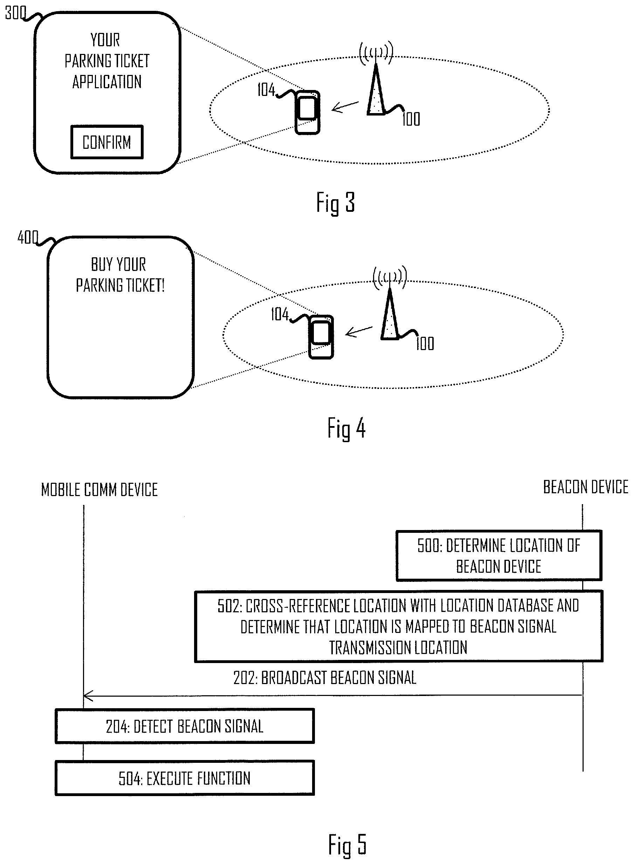

Let us now consider some embodiments of the procedure of Figure 2. Figure 3 illustrates an embodiment where the detection of the beacon signal triggers execution of an application in the mobile communication device. The triggering of the application may be based on both the detection of the beacon signal and, additionally, positioning of the mobile communication device or the beacon device. In the example of Figure 3, the application is a parking ticket application providing the user of the mobile communication device with mobile payment of a parking ticket. The application may be executed upon detecting the beacon signal in a parking lot, and the execution may comprise determining that the current location is in the parking lot and the detection of the beacon signal in the mobile communication device 104. Execution of the application may comprise displaying information on the application in a display unit 300 of the mobile communication device.

Figure 4 illustrates an embodiment where the user is notified about the payment of the parking ticket by outputting a push message in the display unit 400. As a consequence, the combined positioning and the detection of the beacon signal not necessarily triggers the execution of any software application but, instead, execution of another function, e.g. the output of the push notification.

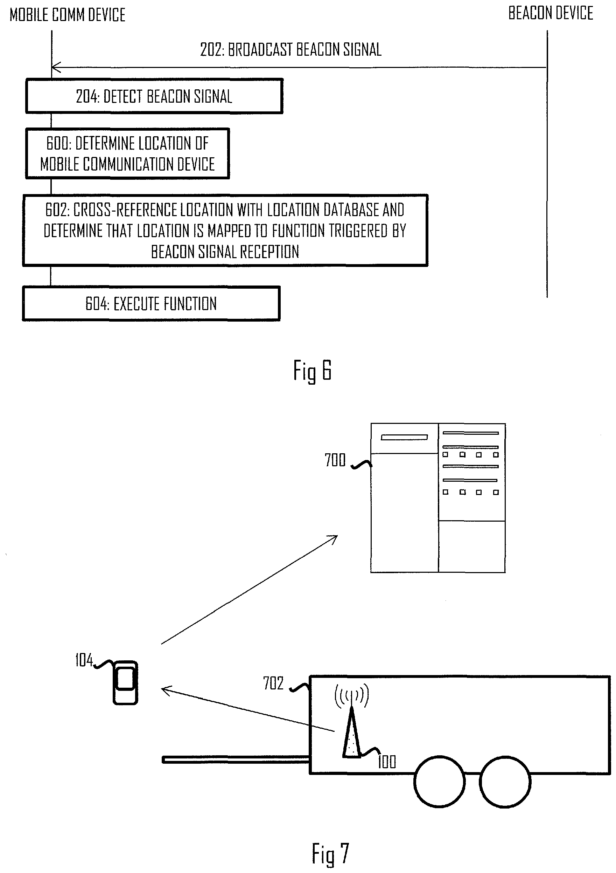

Let us now describe the operation of the mobile communication device 104 and the beacon device in the embodiments of Figures 3 and 4. Figures 5 and 6 illustrate two embodiments for executing the functionality of Figure 3 and/or Figure 4. In an embodiment, the beacon device is suitable for being used in a mobile apparatus such as a vehicle. Referring to Figure 5, the beacon device may be provided with a positioning module configured to track the location of the beacon device. The positioning module may comprise a satellite positioning receiver such as a GPS (Global Positioning System) receiver. The positioning module may comprise an indoor positioning system module configured to employ indoor positioning in determining the location of the beacon device. The indoor positioning system may be based on magnetic positioning, sensor data positioning, or a network of devices configured to wirelessly locate objects and/or people indoors or in a location tracking area. Instead of using positioning satellites such as the GPS, an indoor positioning system may be based magnetic positioning, radio mapping, dead reckoning, or nearby anchors (nodes with a known position) which either actively locate mobile tags or provide the mobile tags with location information, e.g. location coordinates. In the magnetic positioning, radio mapping, and dead reckoning, the mobile tag may be provided with sensors that measure environmental properties such as a magnetic field, a radio environment, or acceleration and compare measurement results and determine the location on the basis of the measurements and, in some cases, reference data mapped to different locations in the location tracking area. A location associated with the reference data that matches with the measurements may be determined as the current location. In the solution based on anchors, the anchors may be provided in fixed and known locations and configured to communicate with the mobile tags in a limited coverage area determining the accuracy of the positioning. Upon identifying a detected anchor, the mobile tag is able to refer to the location of the anchor and, thus, determine the location of the mobile tag.

Referring to Figure 5, the positioning module of the beacon device may determine the location of the beacon device in block 500. The location may be determined according to any one of the above-described embodiments or by using another positioning solution. In block 502, the beacon device determines whether or not the beacon device is located in an area where the beacon signal shall be transmitted. Block 502 may comprise referring to a location database storing information on locations or areas where the beacon signal shall be transmitted. The location database may, additionally or alternatively, store information on locations or areas where the beacon signal shall not be transmitted. In any case, the location database may store information enabling the beacon device to determine on the basis of its location whether or not to transmit the beacon signal.

In an embodiment of block 502, the location database may store home coordinates and the beacon device determines that the beacon signal shall not be transmitted at the home coordinates. However, when the beacon device is determined not to be at the home coordinates, the beacon device may be configured to transmit the beacon signal. In an embodiment using the indoor positioning system, the beacon device may be configured to transmit the beacon signal when it is not capable of determining its location. For example, when using the indoor positioning at home or at a determined building, the capability of not performing the positioning may be considered as an indication that the beacon device has exited that building and the beacon signal transmission may be activated. In an embodiment, the determination may be linked to points of interest (POI) stored in the location database, wherein the beacon device may be configured to transmit the beacon signal upon detecting that the current location matches with one location in a first subset of POIs. The beacon device may be configured not to transmit the beacon signal upon detecting that the current location matches with one location in a second subset of POIs, different from the first subset of POIs.

In yet another embodiment of Figure 502, the beacon device may communicate with an external positioning system such as a satellite positioning receiver of another apparatus, e.g. a satellite positioning receiver comprised in the car, and receive the current location from the external positioning system. In still another embodiment, the beacon device is comprised in a media system integrated into the car, wherein the media system may comprise a Bluetooth communication circuitry. The media system may employ the Bluetooth communication circuitry for purposes other than the beacon transmission, e.g. to function as a headset for a mobile phone or for media data streaming to an audio system of the car. In such an embodiment where the media system further comprises the satellite positioning receiver, the beacon device may communicate with the satellite positioning receiver of the media system via an internal wired connection between them.

Referring to the parking ticket function of Figures 3 or 4, the beacon device may be suitable for being used in a car and configured to determine, on the basis of positioning, whether or not it is in an area where the beacon signal triggering the parking ticket function shall be transmitted. This may be carried out by detecting that the beacon device is not at home, e.g. outside home coordinates. Additionally, the beacon device may employ other sensors to detect whether or not the beacon device is currently moving. The sensors may include a motion sensor such as an acceleration sensor or an electric power sensor linked to an electric system of the car and configured to determine whether or not the car is powered on. The sensor information may be combined with the location information when determining whether or not to transmit the beacon signal. For example, when the beacon device is determined to be in the area in which the beacon signal shall be transmitted and when the beacon device is determined not to be moving, the beacon device may transmit the beacon signal. The area may be an area in which the location database indicates a location of a parking lot or a parking space.

In response to determining, as a result of the positioning of the beacon device, that the beacon signal shall be transmitted, the beacon device transmits the beacon signal in step 202 and the mobile communication device detects the beacon signal in block 204. In this embodiment, the detection of the beacon signal may trigger the mobile communication device to execute a determined function linked to the beacon signal in the mobile communication device, e.g. the execution of any one of the embodiments of Figures 3 and 4.

In the embodiment of Figure 5, the detection of the beacon signal may be the only trigger for the mobile communication device to execute the function. In the embodiment of Figure 6, the beacon device may be configured to transmit the beacon signal in step 202 without using positioning in determining whether or not to carry out the transmission. In an embodiment, the beacon device may be configured to constantly broadcast the beacon signal whenever it is powered on. The positioning may be used in the mobile communication device as an additional criterion for triggering the function. The other criterion may be the detection of the beacon signal in block 204. In the embodiment of Figure 6, upon detecting the beacon signal the mobile communication device may determine the location of the mobile communication device in block 600. The mobile communication device may employ any one of the positioning solutions described above for the beacon device. Above, the determined area(s) were linked to the transmission of the beacon signal. In this embodiment, the same area(s) may be linked to the detection of the beacon signal in order to have the same effect. For example, when the determined location is mapped to a location in which the beacon signal detection triggers the function (block 602), the mobile communication device may execute the function, e.g. any one of the functions of Figures 3 and 4. On the other hand, if the current location is not mapped to a location in which the beacon signal detection triggers the function, the mobile communication device may ignore the detection of block 204 and not execute the function.

In another embodiment of the procedure of Figure 6, blocks 600 and 602 may precede block 204. The mobile communication device may be configured to scan for the beacon signal transmissions only in the area(s) mapped to areas in which the beacon signal detection triggers the function in the mobile communication device. In other area(s), the mobile communication device may suspend the scanning. In this embodiment, when the scanning is being performed as a result of the positioning, the detection of the beacon signal may trigger the execution of block 604.

In an embodiment, the mobile communication device is configured to determine whether or not the mobile communication device is approaching the beacon device or moving away from the beacon device and trigger a function on the basis of that. The mobile communication device may trigger a different function on the basis of whether it is approaching or moving away. The mobile communication device may determine that it is approaching the beacon device when it detects the beacon signal for the first time after a period of not detecting the beacon device. In another embodiment, the mobile communication device may determine that it is approaching the beacon device on the basis of signal strength measurements applied to the received beacon signal. If the signal strength is increasing, the mobile communication device is approaching. If the signal strength is decreasing, the mobile communication device is moving away. The mobile communication device may determine that it is moving away from the beacon device on the basis of not detecting the beacon signal with a determined time interval after the last detection of the beacon signal. In a further embodiment, two or more proximity zones may be provided in the coverage area of the beacon device, wherein each proximity zone is associated with the different function executed by the mobile communication device. Each zone may be associated with a determined signal strength range, for example, and the mobile communication device may determine its location in these zones by mapping signal strength measurement results to the signal strength ranges. Upon determining the current zone, the mobile communication device may execute the function mapped to the zone.

The above-described embodiments of Figures 3 to 6 may be used to execute a function in the mobile communication device for the benefit of the user of the mobile communication device, e.g. the execution of the software application or output of the notification. In another embodiment, the positioning in connection with the beaconing may be used to track the location of the beacon device with the help of an external positioning system employed by the mobile communication device. In many environments such as warehouses, factories, and airports, there are a number of items, devices, and vehicles that need to be location-tracked. These entities may be moved indoors and outdoors such that a conventional location tracking system may not be adequate to track them all the time. It may not be advantageous to dispose a satellite positioning receiver in each entity because of high power consumption of the receiver, because it would result is constant recharging of batteries.

An embodiment of the invention providing the location tracking feature for such entities employs the beacon devices simply configured to broadcast the beacon signal. A beacon device employing Bluetooth Smart, for example, is a low-energy device. Such a beacon device 100 may be attached to every entity or item that needs to be location tracked. In the embodiment of Figure 7, the beacon device 100 is attached to a trailer but the small size of the beacon device 100 provides for a possibility to attach the beacon device to virtually any item, e.g. a tool or a cart.

A mobile communication device 104 carried by personnel, e.g. employees, is a type of device which is recharged constantly, e.g. daily, and battery capacity is not an issue. Such devices may be readily provided with the positioning capability, e.g. a satellite positioning receiver or an indoor positioning capability. As described above, the mobile communication device may be a palm computer, portable computer, or a mobile phone. A server 700 or, in general, a centralized location tracking apparatus may be configured to track the locations of the mobile communication devices 104 and the items 702 comprising the beacon devices 100. The server 700 may be provided with a connection to a network to enable communication other elements of the location tracking system, e.g. the mobile communication devices 104. The network may comprise a local area network such as a Wi-Fi (IEEE 802.11) network or a Bluetooth network, and it may in some embodiments further comprise a public network such as the Internet.

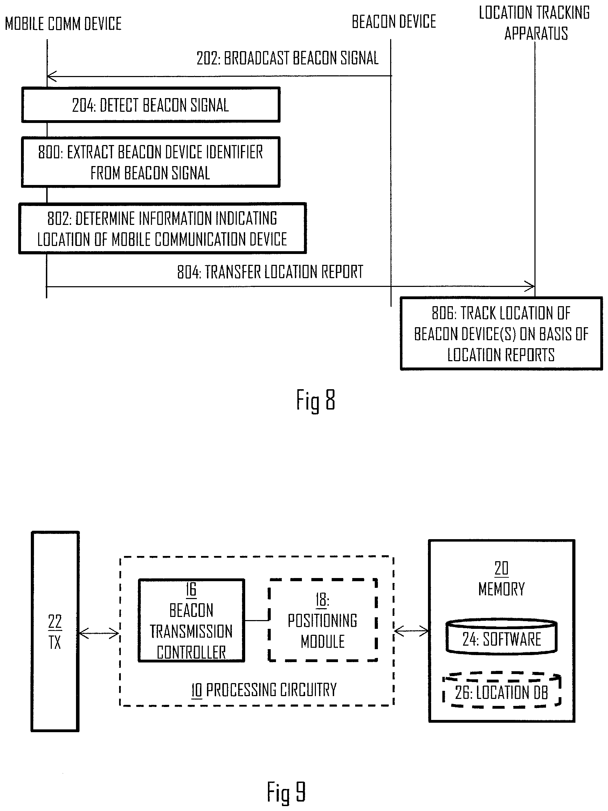

In the embodiment of Figures 7 and 8, the positioning of the mobile communication device 104 is used in the location tracking of the beacon device 100. In response to detecting the beacon signal from the beacon device 100, the mobile communication device 104 may determine an identifier of the beacon device from the beacon signal, determine an information element indicating a location of the mobile communication device 104, and transmit the identifier and the information element to the server 700 through the network.

Referring to Figure 8, the mobile communication device may be configured to constantly or periodically scan for the beacon signals transmitted by the beacon devices. The mobile communication device may store a list of identifiers of the beacon devices scanned for and/or one or more device classes scanned for. A device class of a beacon device may be indicated in the beacon signal to enable the mobile communication device to determine the device class of a beacon device transmitting a detected beacon signal. In step 202, the beacon device broadcasts the beacon signal, and the mobile communication device detects the beacon signal in block 204. Upon detecting the beacon signal, the mobile communication device may extract the identifier of the beacon device from the beacon signal (block 800) and determine the location of the mobile communication device at the time of detecting the beacon signal (block 802). Block 802 may comprise determining location coordinates by using a satellite positioning receiver or any other above-described positioning methods. The location coordinates may be geographical coordinates in a determined coordinate system. The location coordinates may be the nearest anchor point, e.g. an identifier of the nearest anchor node.

In step 804, the mobile communication device transmits a location report to a location tracking apparatus, e.g. the server 700. The location report may comprise the identifier of the beacon device and the information indicating the location of the mobile communication device at the time of detecting the beacon signal in block 204. In block 806, the location tracking apparatus maps the identifier of the beacon device with the location of the mobile communication device on the basis of the received location report and stores the location of the mobile communication device as a current location of the beacon device in a location database. In a similar manner, the location tracking apparatus receives location reports from other mobile communication devices reporting locations of other beacon devices and stores corresponding locations of the beacon devices in the location database.

In an embodiment, the mobile communication device transmits the location reports periodically to the location tracking apparatus. In the embodiment of Figure 8, the mobile communication device transmits a single location-identifier pair comprising the location of the mobile communication device and the identifier of the beacon device. In other embodiments, the mobile communication device may aggregate a plurality of location-identifier pairs of different beacon devices in a single location report.

The embodiment of Figures 7 and 8 may be used to track the location of the assets or items, and the location may be tracked by the user of the client device, wherein the client device may be one of the mobile communication devices reporting the locations of the beacon devices. One such a use scenario is a parent tracking the location of a child in an amusement park, for example. The parent and other parents may carry the mobile communication device(s) and each child may be provided with a beacon device. The mobile communication devices may report the locations of any detected beacon device to the server computer in the above-described manner. The parent(s) may have loaded a specific software application into the mobile communication device and, accordingly, configure the mobile communication device to carry out the location reporting functionality. The application may further provide the location tracking feature of a beacon device paired with the mobile communication device. The server computer may store a database containing information on the pairings between each mobile communication device and one or more beacon device. The application may provide a function to request the location(s) of the paired tag(s) from the server computer, wherein the function comprises transmitting a positioning request message to the server computer. The request message may identify the beacon device whose location is requested. Upon receiving the request, the server computer may check an identifier of the mobile communication device and whether or not the identifier is paired to beacon device whose location is requested. If the database containing the pairings indicates that the pairing is valid, the server computer may retrieve the current location of the beacon device and send a response message to the requesting mobile communication device. The response message may comprise or indicate the location of the requested beacon device. In an embodiment, the location may be indicated or shown on a map displayed by the mobile communication device. Use of the pairing as an authentication scheme enables the parents to track only their children and not anyone else's children, thus providing security. Any mobile communication device may, however, report the locations of the unpaired beacon devices, thus improving the efficiency of the location tracking. In an embodiment, the pairing is carried out through proximity communication between the mobile communication device and the beacon device being paired. For example, the beacon device may comprise a near-field communications (NFC) tag storing the universally unique identifier of the beacon device also comprised in the beacon message broadcasted by the beacon device. The mobile communication device may read the identifier from the tag and transmit to the server computer a pairing message indicating the pairing with the beacon device. The server computer may then store the pairing. Any other pairing method is equally applicable, e.g. manual entering of the pair in the database.

The embodiment of Figures 7 and 8 may be used in the embodiments of Figures 3 to 6 to trigger the function in the mobile communication device. Such a further embodiment may employ the location tracking apparatus to determine whether the location-identifier pair triggers the execution of the determined function in the mobile communication device. The beacon device and the mobile communication device may operate as described above in connection with Figure 8 and with respect to the transmission of the location of the mobile communication device and the identifier of the detected beacon device to the location tracking apparatus. The location tracking apparatus may then store, in a database, information on whether or not the location-identifier pair triggers the execution of the function in the mobile communication device. The database may further store information on the function triggered by each location-identifier pair. The location tracking apparatus may check the database for the location-identifier pair received from the mobile communication device. If the location-identifier pair is indicated as triggering a function, the location tracking apparatus may determine from the database the function triggered by the received-location-identifier pair. Then, the location tracking apparatus may transmit to the mobile communication device through the network information indicating the function that shall be executed in the mobile communication device in response to the location-identifier pair. Upon receiving the information, the mobile communication device may determine the function and execute the function. As described above, the function may be the launch of the software application and/or output of the notification via the user interface.

An embodiment provides an apparatus comprising at least one processor and at least one memory including a computer program code, wherein the at least one memory and the computer program code are configured, with the at least one processor, to cause the apparatus to execute at least some of the above-described functions of the beacon device. Figure 9 illustrates a block diagram of such an apparatus. The apparatus may be the beacon device or an apparatus comprised in the beacon device. Referring to Figure 9, the apparatus comprises a processing circuitry 10 comprising the at least one processor and the memory 20 storing the computer program code 24 defining the operation of the processing circuitry 10. The processing circuitry 10 may comprise a beacon transmission controller 16 configured to control the transmissions of the beacon signals according to a determined criterion. In some embodiments, the beacon transmission controller 16 is configured to periodically transmit the beacon signal in a continuous manner. In some embodiments, the periodic transmissions are suspended according to a criterion. One criterion may be the positioning, as described above. For that purpose, the processing circuitry 10 may comprise a positioning module 18 configured to monitor the location of the beacon device. The memory 20 may store a location database 26 storing criteria for triggering the beacon transmissions on the basis of the results of the positioning. When the positioning executed by the positioning module 18 provides a result that is mapped in the location database 26 to the transmission of the beacon signal, the positioning module 18 may output a control signal to the beacon transmission controller 16 to trigger the periodic beacon transmissions. In response to the control signal, the beacon transmission controller 16 configures a radio transmission circuitry 22 of the apparatus to transmit the beacon signal comprising an identifier of the apparatus. When the positioning module 18 detects that the beacon device is not in an area where beacon transmissions shall be carried out, it may prevent the beacon transmission controller 16 to transmit the beacon signal.

The radio transmission circuitry may comprise hardware and software necessary for implementing at least one radio communication protocol, e.g. the Bluetooth Smart protocol. Such a Bluetooth chip and associated radio frequency components including an antenna may be made by using state-of-the-art components.

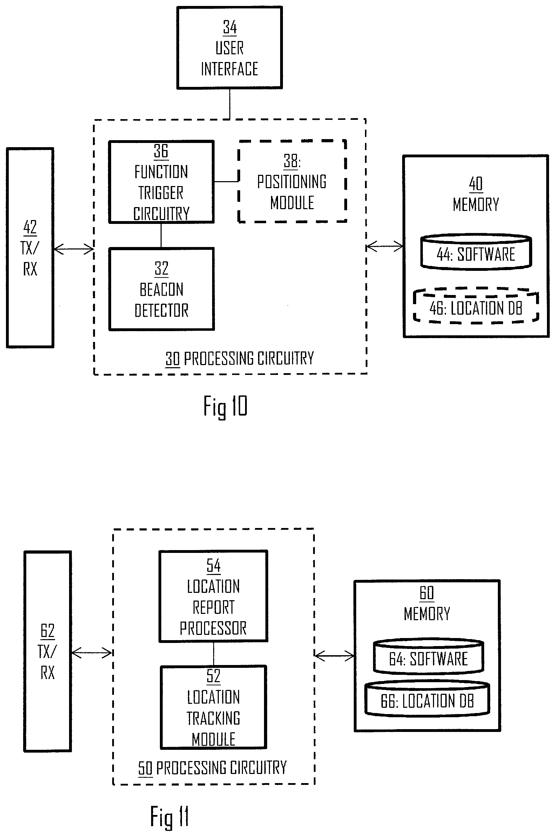

An embodiment provides an apparatus comprising at least one processor and at least one memory including a computer program code, wherein the at least one memory and the computer program code are configured, with the at least one processor, to cause the apparatus to execute at least some of the above-described functions of the mobile communication device. Figure 10 illustrates a block diagram of such an apparatus. The apparatus may be the mobile communication device or an apparatus comprised in the mobile communication device. Referring to Figure 10, the apparatus comprises a processing circuitry 30 comprising the at least one processor and the memory 40 storing the computer program code 44 defining the operation of the processing circuitry 30. The processing circuitry 30 may comprise a beacon detector circuitry 32 configured to scan for beacon signal transmissions from beacon devices. In response to the detection of a beacon signal, the beacon detector circuitry 32 may output a control signal to a function trigger circuitry 36 configured to trigger a determined function in response to the control signal. As described above, the function trigger circuitry 36 may launch a software application in the mobile communication device, output a notification via a user interface 34 of the apparatus, or cause a positioning module 38 to determine the current location of the apparatus and transmission of an identifier of the detected beacon device and the current location of the apparatus to a location tracking apparatus. The positioning module 38 may in some embodiments be called upon detecting the beacon signal to verify whether or not the apparatus is currently located in an area where the beacon signal triggers the function. The positioning module 38 may refer to a location database 46 stored in the memory 40 when determining the location of the apparatus and/or when determining whether or not the apparatus is located in the area where the beacon signal detection triggers the function. Upon determining that the apparatus is located in the area triggering the function, the positioning module 38 may output a corresponding control signal to the function trigger circuitry 36 so as to trigger the execution of the function.

The apparatus may further comprise a communication interface 42 configured to provide the apparatus with capability of receiving the beacon signals and communicating with the location tracking apparatus. The communication interface 42 may comprise hardware and software necessary for implementing at least one radio communication protocol, e.g. the Bluetooth Smart protocol, an IEEE 802.11 protocol, and/or a cellular communication protocol such as UMTS LTE (Universal Mobile Telecommunication System Long-Term Evolution). Such radio frequency components may be made by using state-of-the-art components.

An embodiment provides an apparatus comprising at least one processor and at least one memory including a computer program code, wherein the at least one memory and the computer program code are configured, with the at least one processor, to cause the apparatus to execute at least some of the above-described functions of the location tracking apparatus. Figure 11 illustrates a block diagram of such an apparatus. The apparatus may be the location tracking apparatus, e.g. a server computer. Referring to Figure 11, the apparatus comprises a processing circuitry 50 comprising the at least one processor and the memory 60 storing the computer program code 64 defining the operation of the processing circuitry 60. The processing circuitry 60 may comprise a location report processor 54 configured to process location reports received from a plurality of mobile communication devices. The location report processor 54 may be configured to extract at least one identifier and at least one location information from the received location report and output the location-identifier pair(s) to a location tracking module 52. The location tracking module 52 may store the location-identifier pair(s) in a location database 66 stored in the memory 60. The location database may further store item identifiers as mapped to the beacon device identifiers. An item identifier may be an identifier assigned to an asset or entity being location track with the help of the beacon device attached to it and the mobile communication devices. Upon receiving from a client device, e.g. a client computer, a query requesting for a location of a certain item identified by an item identifier, the location tracking module 52 may refer to the location database 66 for a record comprising the item identifier and retrieve a location mapped to the item identifier. In response, the location tracking module may transmit the retrieved location to the client device.

The apparatus may further comprise a communication interface 62 providing the apparatus with communication capability over wired and/or wireless networks. The communication interface may comprise hardware and software needed for realizing network connections through the Internet, for example.

A system comprising the above-described apparatuses of Figures 9, 10, 11 may be provided. In an embodiment, the system comprises the location tracking apparatus, a plurality of mobile communication devices, and a plurality of beacon devices.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 2 to 8 may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to systems defined above but also to other suitable systems. The communication protocols used and the specifications of positioning systems develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A method for triggering a location-based function in a mobile communication device, the method performed by the mobile communication device, the method comprising:
detecting (204), in a mobile communication device (104), a Bluetooth beacon signal broadcasted by a Bluetooth beacon device;
upon detecting the Bluetooth beacon signal determining (600) a location of the mobile communication device at the time of detecting the Bluetooth beacon signal;
**characterized in that** the method further comprises:
determining (602) whether or not the determined location maps to a determined area in which the detection of a Bluetooth beacon signal triggers the location-based function; if the determined location maps to the determined area, launching (604) a location-based function in the mobile communication device and, if the determined location does not map to the determined area, not executing the location-based function.

2. A method for triggering a location-based function in a mobile communication device, the method performed by the mobile communication device, the method comprising:
determining (600) a location of the mobile communication device;
determining (602) whether or not the determined location maps to a determined area in which the detection of a Bluetooth beacon signal triggers the location-based function;
if the determined location maps to the determined area, scanning for a Bluetooth beacon signal and, upon detecting the Bluetooth beacon signal broadcasted by a Bluetooth beacon device, launching (604) the location-based function in the mobile communication device; and
in other areas, suspending the scanning for the Bluetooth beacon signal.

3. The method of claim 1 or 2, wherein the location coordinates of the mobile communication device are determined by using a satellite positioning system.

4. The method of claim 1 or 2, wherein the location of the mobile communication device is determined by using an indoor positioning system.

5. The method of any preceding claim, wherein the location-based function comprises launching a software application in the mobile communication device.

6. The method of any preceding claim, wherein the location-based function comprises outputting a notification through a user interface of the mobile communication device.

7. The method of any preceding claim, wherein the Bluetooth beacon device from which the Bluetooth beacon signal is received is unpaired with the mobile communication device.

8. A mobile communication device comprising means for carrying out all the steps of the method according to any preceding claim 1 to 7.

## Patentansprüche

1. Verfahren zum Auslösen einer standortbasierten Funktion in einer mobilen Kommunikationsvorrichtung, wobei das Verfahren durch die mobile Kommunikationsvorrichtung durchgeführt wird, wobei das Verfahren umfasst:
Ermitteln (204), in einer mobilen Kommunikationsvorrichtung (104), eines Bluetooth-Bakensignals, das von einer Bluetooth-Bakenvorrichtung rundgesendet wird;
bei Ermittlung des Bluetooth-Bakensignals, Bestimmen (600) eines Standorts der mobilen Kommunikationsvorrichtung zum Zeitpunkt der Ermittlung des Bluetooth-Bakensignals;
**dadurch gekennzeichnet, dass** das Verfahren des Weiteren umfasst:
Bestimmen (602), ob der bestimmte Standort auf einen bestimmten Bereich verweist, in dem die Ermittlung eines Bluetooth-Bakensignals die standortbasierte Funktion auslöst;
wenn der bestimmte Standort auf den bestimmten Bereich verweist, Starten (604) einer standortbasierten Funktion in der mobilen Kommunikationsvorrichtung und, wenn der bestimmte Standort nicht auf den bestimmten Bereich verweist, nicht Ausführen der standortbasierten Funktion.

2. Verfahren zum Auslösen einer standortbasierten Funktion in einer mobilen Kommunikationsvorrichtung, wobei das Verfahren durch die mobile Kommunikationsvorrichtung durchgeführt wird, wobei das Verfahren umfasst:
Bestimmen (600) eines Standorts der mobilen Kommunikationsvorrichtung;
Bestimmen (602), ob der bestimmte Standort auf einen bestimmten Bereich verweist, in dem die Ermittlung eines Bluetooth-Bakensignals die standortbasierte Funktion auslöst;
wenn der ermittelte Standort auf den bestimmten Bereich verweist, Suchen nach einem Bluetooth-Bakensignal und, bei Ermittlung des Bluetooth-Bakensignals, das von einer Bluetooth-Bakenvorrichtung rundgesendet wird, Starten (604) der standortbasierten Funktion in der mobilen Kommunikationsvorrichtung; und
in anderen Bereichen, Anhalten der Suche nach dem Bluetooth-Bakensignal.

3. Verfahren nach Anspruch 1 oder 2, wobei die Standortkoordinaten der mobilen Kommunikationsvorrichtung unter Verwendung eines Satellitenpositionierungssystems bestimmt werden.

4. Verfahren nach Anspruch 1 oder 2, wobei der Standort der mobilen Kommunikationsvorrichtung unter Verwendung eines Innenraum-Positionierungssystems bestimmt wird.

5. Verfahren nach einem vorhergehenden Anspruch, wobei die standortbasierte Funktion das Starten einer Softwareanwendung in der mobilen Kommunikationsvorrichtung umfasst.

6. Verfahren nach einem vorhergehenden Anspruch, wobei die standortbasierte Funktion das Ausgeben einer Benachrichtigung durch eine Benutzerschnittstelle der mobilen Kommunikationsvorrichtung umfasst.

7. Verfahren nach einem vorhergehenden Anspruch, wobei die Bluetooth-Bakenvorrichtung, von der das Bluetooth-Bakensignal empfangen wird, nicht mit der mobilen Kommunikationsvorrichtung gepaart ist.

8. Mobile Kommunikationsvorrichtung, umfassend ein Mittel zum Ausführen aller Schritte des Verfahrens nach einem der vorhergehenden Ansprüche 1 bis 7.

## Revendications

1. Procédé pour déclencher une fonction basée sur une localisation dans un dispositif de communication mobile, le procédé étant effectué par le dispositif de communication mobile, le procédé comprenant de :
détecter (204), dans un dispositif de communication mobile (104), un signal de balise Bluetooth diffusé par un dispositif de balise Bluetooth ;
lors de la détection du signal de balise Bluetooth, déterminer (600) une localisation du dispositif de communication mobile au moment de la détection du signal de balise Bluetooth ;
**caractérisé en ce que** le procédé comprend en outre de :
déterminer (602) si la localisation déterminé correspond ou non à une zone déterminée dans laquelle la détection d'un signal de balise Bluetooth déclenche la fonction basée sur une localisation ;
si la localisation déterminée correspond à la zone déterminée, lancer (604) une fonction basée sur une localisation dans le dispositif de communication mobile et, si la localisation déterminée ne correspond pas à la zone déterminée, ne pas exécuter la fonction basée sur une localisation.

2. Procédé pour déclencher une fonction basée sur une localisation dans un dispositif de communication mobile, le procédé étant effectué par le dispositif de communication mobile, le procédé comprenant de :
déterminer (600) une localisation du dispositif de communication mobile ;
déterminer (602) si la localisation déterminée correspond à une zone déterminée dans laquelle la détection d'un signal de balise Bluetooth déclenche la fonction basée sur une localisation ;
si la localisation déterminée correspond à la zone déterminée, rechercher par balayage un signal de balise Bluetooth et, lors de la détection du signal de balise Bluetooth diffusé par un dispositif de balise Bluetooth, lancer (604) la fonction basée sur une localisation dans le dispositif de communication mobile ; et
dans d'autres zones, suspendre la recherche par balayage du signal de balise Bluetooth.

3. Procédé selon la revendication 1 ou 2, dans lequel les coordonnées de localisation du dispositif de communication mobile sont déterminées en utilisant un système de positionnement par satellite.

4. Procédé selon la revendication 1 ou 2, dans lequel la localisation du dispositif de communication mobile est déterminée en utilisant un système de positionnement en intérieur.

5. Procédé selon l'une quelconque des revendications précédentes, dans lequel la fonction basée sur une localisation comprend de lancer une application logicielle dans le dispositif de communication mobile.

6. Procédé selon l'une quelconque des revendications précédentes, dans lequel la fonction basée sur une localisation comprend de délivrer en sortie une notification par l'intermédiaire d'une interface utilisateur du dispositif de communication mobile.

7. Procédé selon l'une quelconque des revendications précédentes, dans lequel le dispositif de balise Bluetooth à partir duquel le signal de balise Bluetooth est reçu n'est pas apparié au dispositif de communication mobile.

8. Dispositif de communication mobile comprenant des moyens pour effectuer toutes les étapes du procédé selon l'une quelconque des revendications précédentes 1 à 7.
